# EUROPÄISCHE PATENTSCHRIFT

(11) **EP 1 835 201 B1**
(45) Veröffentlichungstag und Bekanntmachung des Hinweises auf die Patenterteilung: **21.10.2009**
(21) Anmeldenummer: 07103122.3
(22) Anmeldetag: 27.02.2007
(51) Int. Cl.: F16H 39/00

(54) **Hydrostatgetriebe eines hydrostatisch-mechanischen Leistungsverzweigungsgetriebes**
Hydrostatic transmission of a high performance hydrostatic-mechanical bifurcation transmission
Engrenage hydrostatique d'un engrenage d'embrayage à division de puissance hydrostatique-mécanique

(30) Priorität: 15.03.2006 DE 102006011804
(43) Veröffentlichungstag der Anmeldung: 19.09.2007
(73) Patentinhaber: ZF Friedrichshafen AG, 88038 Friedrichshafen (DE)
(72) Erfinder: Prebeck, Stefan, 94034, Passau (DE)
(74) Vertreter: Zietlow, Karl-Peter

(56) Entgegenhaltungen:
- EP-A- 0 736 407
- EP-A- 1 260 428
- DE-A1- 10 117 334
- DE-A1- 19 525 823
- DE-B4- 4 396 170

## Beschreibung

Die vorliegende Erfindung betrifft ein Hydrostatgetriebe eines hydrostatisch-mechanisches Leistungsverzweigungsgetriebes, gemäß dem Oberbegriff des Patentanspruchs 1. Des weiteren bezieht sich die Erfindung auf ein Verfahren zum Betreiben des erfindungsgemäßen Hydrostatgetriebes eines hydrostatisch-mechanischen Leistungsverzweigungsgetriebes, gemäß dem Oberbegriff des Patentanspruchs 5. Ein entsprechendes Getriebe bzw. Verfahren ist aus dem Dokument EP 0 736 407 A2 bekannt.

Nach dem Stand der Technik umfassen landwirtschaftliche Nutzfahrzeuge hydrostatisch-mechanische Leistungsverzweigungsgetriebe, welche aus einem stufenlos verstellbaren Hydrostatgetriebe mit einer volumenverstellbaren und einer volumenkonstanten Einheit, einem Summierungsgetriebe und einem Bereichsgetriebe mit mehreren schaltbaren Gängen bestehen. Durch das Summierungsgetriebe werden die Drehzahlen und Drehmomente des Hydrostatgetriebes und der Antriebsmaschine zusammengeführt. Mit Hilfe von Schaltkupplungen sind verschiedene Gänge anwählbar, indem die Ausgangswelle des Summiergetriebes über unterschiedliche Stirnradstufen mit der Abtriebswelle gekoppelt wird. Stufenlose Getriebe haben gegenüber mechanischen Getrieben den Vorteil, dass in jedem Fahrzustand mit optimaler Motordrehzahl gefahren werden kann und keine Zugkraftunterbrechung beim Schalten auftritt.

Die Hydrostatgetriebe in hydrostatisch-mechanischen Leistungsverzweigungsgetrieben weisen in der Regel Hochdruckbegrenzungsventile auf, durch die der maximale Arbeitsdruck des Hydrostatgetriebes begrenzt wird. Dadurch soll das Hydrostatgetriebe gegen Überlastung durch zu hohen Arbeitsdruck geschützt werden.

Durch diese Begrenzung des Hochdrucks wird somit auch das Moment über den hydrostatischen Zweig des leistungsverzweigten Getriebes und damit auch die Zugkraft des Fahrzeugs begrenzt. Im Fahrzeug äußert sich das Öffnen der Ventile zum Abblasen des Hochdrucks durch Stehenbleiben des Fahrzeugs bei laufendem Motor. Damit das Stehenbleiben des Fahrzeugs für den Fahrer nicht unerwartet kommt, wird in manchen Applikationen dieser Fahrzustand durch aktives Verzögern des Fahrzeugs über das Getriebe asymptotisch angenähert, und damit dem Fahrer mitgeteilt, dass das Fahrzeug an seine Grenzzugkraft kommt.

Aus dem Stand der Technik ist bekannt, über das Verhältnis der realen Hydrostat-Eingangs- und Hydrostat-Ausgangsdrehzahl und der Differenz zwischen dem realen und dem theoretischen Drehzahlverhältnis (d.h. aus der Hydrostat-Übersetzung) den Hydrostatdruck rechnerisch zu ermitteln. Zu diesem Zweck werden Kennfelder der Hydrostatleckage in Abhängigkeit vom Arbeitsdruck und weiteren physikalischen Parametern herangezogen. Aufgrund von Fertigungstoleranzen und betriebsbedingter Abnutzung weichen die Rechenergebnisse trotz Kalibrierungen in nachteiliger Weise vom tatsächlich anliegenden Arbeitsdruck ab.

Bei landtechnischen und kommunalen Anwendungen gibt es Einsatzfälle, bei denen zwar nicht ständig unmittelbar an der Hochdruckgrenze gefahren werden muss, wohl aber für wenige Sekunden ein sehr hohes Moment notwendig ist. Dies kann beispielsweise beim Losreißen eines Güterwagons im Rangierbetrieb oder beim Überwinden eines Hindernisses im Feld der Fall sein.

Bei den heutigen hydrostatisch-mechanischen Leistungsverzweigungsgetrieben können diese Anwendungen aufgrund der Hochdruckbegrenzungsventile, die auf die Dauerbelastung des Hydrostatgetriebes ausgelegt sind, nicht abgedeckt werden. Andererseits können Hydrostatgetriebe kurzfristig mit deutlich höheren Arbeitsdrücken arbeiten. Voraussetzung hierfür ist, dass sich die Bauteile anschließend wieder erholen können. Für die Verzahnungen im Getriebe sind kurzzeitig überhöhte Momente kein Problem, weil in heutigen auf Laufruhe ausgelegten Getrieben die Zahnbruchsicherheit entsprechend hoch ist.

Der vorliegenden Erfindung liegt die Aufgabe zugrunde, ein Hydrostatgetriebe eines hydrostatisch-mechanischen Leistungsverzweigungsgetriebes derart zu modifizieren, dass für kurze Zeitintervalle ein wesentlich höherer Druck einstellbar ist, als der Druck, der bei einer Dauerbelastung des Hydrostatgetriebes als Maximaldruck zugrundegelegt wird.

Des weiteren soll ein Verfahren zum Betreiben des erfindungsgemäßen hydrostatisch-mechanischen Leistungsverzweigungsgetriebes angegeben werden. Insbesondere soll das Verfahren den sicheren Betrieb des erfindungsgemäßen hydrostatisch~mechanischen Leistungsverzweigungsgetriebes mit einem Druck der höher ist, als der Druck, der bei einer Dauerbelastung des Hydrostatgetriebes als Maximaldruck zugrundegelegt wird, angegeben werden.

Diese Aufgabe wird für ein hydrostatisch-mechanisches Leistungsverzweigungsgetriebe durch die Merkmale des Patentanspruchs 1 gelöst. Ein Verfahren zum Betreiben des erfindungsgemäßen hydrostatisch-mechanischen Leistungsverzweigungsgetriebes ist Gegenstand des Patentanspruchs 5. Weitere erfindungsgemäße Ausgestaltungen und Vorteile gehen aus den Unteransprüchen hervor.

Gemäß der Erfindung ist für entsprechend kurz definierte Zeitintervalle in einer Hochdruckphase ein wesentlich höherer Druck einstellbar, als der Druck, der bei einer Dauerbelastung des Hydrostatgetriebes als Maximaldruck zugrundegelegt wird (Hochdruckphase). Nach jeder Hochdruckphase folgt eine Erholungsphase mit einem Druck, der niedriger als der Maximaldruck oder gleich dem Maximaldruck ist. Die erforderlichen Erholungsphasen können über einen Timer unter Berücksichtigung der aktuell über die Hochdrucksensoren gemessenen Arbeitsdrücke im Hydrostatgetriebe exakt überwacht werden, wobei eine erneute Hochdruckphase nach Abschluss der Erholungsphase wieder freigeschaltet werden kann.

Gemäß der Erfindung kann bei einem Ausfall der Hochdruck-Sensoren eine Hochdruckberechnung über das Verhältnis der realen Hydrostat-Eingangs- und Hydrostat-Ausgangsdrehzahl und der Differenz zwischen dem realen und dem theoretischen Drehzahlverhältnis unter Berücksichtigung von Kennfeldern der Hydrostatleckage in Abhängigkeit vom Arbeitsdruck und weiteren Parametern erfolgen, wobei auf den berechneten Wert ein Offset addiert wird, um die Ungenauigkeiten der Berechnung zu berücksichtigen.

Die gemessenen Hochdrücke im Hydrostatgetriebe sowie die Länge der Hochdruckphasen und die Zeitabstände der Hochdruckphasen zueinander können in einem Steuergerät klassiert werden und zu einer Aussage über die Restlebensdauer des Hydrostatgetriebes herangezogen werden. Wird bei einem Fahrzeug das Hydrostatgetriebe anhand der Klassierung überproportional beansprucht, kann dem Fahrer über eine Meldung auf einem Display eine Empfehlung angezeigt werden, den Hydrostat überprüfen und gegebenenfalls tauschen zu lassen.

## Patentansprüche

1. Hydrostatisch-mechanisches Leistungsverzweigungsgetriebe mit einem Hydrostatgetriebe, wobei das Hydrostatgetriebe mit der Steuerung des hydrostatisch-mechanischen Leistungsverzweigungsgetriebes verbundene Hochdruck-Sensoren aufweist und das Getriebe bei einem Arbeitsdruck betreibbar ist, der bei einer Dauerbelastung des Hydrostatgetriebes als Maximaldruck zugrundegelegt wird, **dadurch gekennzeichnet, dass** für kürze Zeitintervalle ein wesentlich höherer Druck als der Maximaldruck für Dauerbelastung einstellbar ist, wobei nach jedem Zeitintervall mit höherem Druck als der Maximaldruck ein Zeitintervall einer Erholungsphase mit einem Druck kleiner oder gleich dem Maximaldruck folgt, wobei die Erholungsphase unter Berücksichtigung der aktuell über die Höchdrucksensoren gemessenen Arbeitsdrücke im Hydrostatgetriebe überwacht wird.

2. Hydrostatisch-mechanisches Leistungsverzweigungsgetriebe nach Anspruch 1, **dadurch gekennzeichnet, dass** die erforderlichen Erholungsphasen über einen Timer exakt überwachbar sind, und eine erneute Hochdruckphase nach Abschluss der Erholungsphase freischaltbar ist.

3. Hydrostatisch-mechanisches Leistungsverzweigungsgetriebe nach Anspruch 1, **dadurch gekennzeichnet, dass** bei Ausfall der Hochdruck-Sensoren eine Hochdruckberechnung über das Verhältnis der realen Hydrostat-Eingangs- und Hydrostat-Ausgangsdrehzahl und der Differenz zwischen dem realen und dem theoretischen Drehzahlverhältnis unter Berücksichtigung von Kennfeldern der Hydrostatleckage in Abhängigkeit vom Arbeitsdruck erfolgt, wobei auf den berechneten Wert ein Offset addiert wird, um die Ungenauigkeiten der Berechnung zu berücksichtigen.

4. Hydrostatisch-mechanisches Leistungsverzweigungsgetriebe nach Anspruch 1, **dadurch gekennzeichnet, dass** die gemessenen Hochdrücke im Hydrostatgetriebe sowie die Länge der Hochdruckphasen und die Zeitabstände der Hochdruckphasen zueinander in einem Steuergerät klassierbar sind und zu einer Aussage über die Restlebensdauer des Hydrostatgetriebes dienen.

5. Verfahren zum Betrieb eines Hydrostatisch-mechanischen Leistungsverzweigungsgetriebes mit einem Hydrostatgetriebe, wobei das Hydrostatgetriebe mit der Steuerung des hydrostatisch-mechanischen Leistungsverzweigungsgetriebes verbundene Hochdruck-Sensoren aufweist und das Getriebe bei einem Arbeitsdruck betreibbar ist, der bei einer Dauerbelastung des Hydrostatgetriebes als Maximaldruck zugrundegelegt wird, **dadurch gekennzeichnet, dass** für kurze Zeitititetvalle ein Wesentlich höherer Druck als der Maximaldruck für Dauerbelastung eingestellt wird, wobei nach jedem Zeitintervall mit höherem Druck als der Maximaldruck ein Zeitintervall einer Erholungsphase mit einem Druck kleiner oder gleich dem Maximaldruck folgt, wobei die Erholungsphase unter Berücksichtigung der aktuell über die Hochdrucksensoren gemessenen Arbeitsdrücke im Hydrostatgetriebe überwacht wird.

6. Verfahren zum Betrieb eines Hydrostatisch-mechanischen Leistungsverzweigungsgetriebes nach Anspruch 1, **dadurch gekennzeichnet, dass** die erforderlichen Erholungsphasen über einen Timer exakt überwacht werden, und eine erneute Hochdruckphase nach Abschluss der Erholungsphase freigeschaltet wird.

7. Verfahren zum Betrieb eines Hydrostatisch-mechanischen Leistungsverzweigungsgetriebes nach Anspruch 1, **dadurch gekennzeichnet. dass** bei Ausfall der Hochdruck-Sensoren eine Hochdruckberechnung über das Verhältnis der realen Hydrostat-Eingangs- und Hydrostat-Ausgangsdrehzahl und der Differenz zwischen dem realen und dem theoretischen Drehzahlverhältnis unter Berücksichtigung von Kennfeldern der Hydrostatleckage in Abhähgigkeit vom Arbeitsdruck erfolgt, wobei auf den berechneten Wert ein Offset addiert wird, um die Ungenauigkeiten der Berechnung zu berücksichtigen.

8. Verfahren zum Betrieb eines Hydrostatisch-mechanischen Leistungsverzweigungsgetriebes nach Anspruch 1, **dadurch gekennzeichnet, dass** die gemessenen Hochdrücke im Hydrostatgetriebe sowie die Länge der Hochdruckphasen und die Zeitabstände der Hochdruckphasen zueinander in einem Steuergerät klassiert werden und zu einer Aussage über die Restlebensdauer des Hydrostatgetriebes herangezogen werden.

## Claims

1. Hydrostatic mechanical power-split transmission with a hydrostatic gear, the hydrostatic gear having high-pressure sensors connected to the control of the hydrostatic mechanical power-split transmission, and the transmission being capable of being operated at a working pressure which is taken as the basis for a maximum pressure during continuous load on the hydrostatic gear, **characterized in that** a substantially higher pressure than the maximum pressure of continuous load can be set for short time intervals, each time interval with a higher pressure than the maximum pressure being followed by a time interval of a recovery phase with a pressure lower than or equal to the maximum pressure, the recovery phase being monitored, taking into account the working pressures currently measured in the hydrostatic gear via the high-pressure sensors.

2. Hydrostatic mechanical power-split transmission according to Claim 1, **characterized in that** the required recovery phases can be monitored exactly via a timer, and a renewed high-pressure phase can be enabled after the conclusion of the recovery phase.

3. Hydrostatic mechanical power-split transmission according to Claim 1, **characterized in that,** in the event of a failure of the high-pressure sensors, a high-pressure calculation is carried out via the ratio of the actual hydrostatic input and hydrostatic output rotational speeds and the difference between the actual and the theoretical rotational speed ratio, taking into account characteristic maps of the hydrostatic leakage as a function of the working pressure, an offset being added to the calculated value in order to take the inaccuracies in the calculation into account.

4. Hydrostatic mechanical power-split transmission according to Claim 1, **characterized in that** the measured high pressures in the hydrostatic gear and also the length of the high-pressure phases and the time intervals of the high-pressure phases in relation to one another can be classified in a control apparatus and serve as evidence of the remaining service life of the hydrostatic gear.

5. Method for operating a hydrostatic mechanical power-split transmission having a hydrostatic gear, the hydrostatic gear having high-pressure sensors connected to the control of the hydrostatic mechanical power-split transmission, and the transmission being capable of being operated at a working pressure which is taken as a basis for the maximum pressure during continuous load on the hydrostatic gear, **characterized in that** a substantially higher pressure than the maximum pressure for continuous load is set for short time intervals, each time interval with a higher pressure than the maximum pressure being followed by a time interval of a recovery phase with a pressure lower than or equal to the maximum pressure, the recovery phase being monitored, taking into account the working pressures currently measured in the hydrostatic gear via the high-pressure sensors.

6. Method for operating a hydrostatic mechanical power-split transmission according to Claim 1,
**characterized in that** the required recovery phases are monitored exactly via a timer, and a renewed high-pressure phase is enabled after the conclusion of the recovery phase.

7. Method for operating a hydrostatic mechanical power-split transmission according to Claim 1,
**characterized in that,** in the event of a failure of the high-pressure sensors, a high-pressure calculation is carried out via the ratio of the actual hydrostatic input and hydrostatic output rotational speeds and the difference between the actual and the theoretical rotational speed ratio, taking into account characteristic maps of the hydrostatic leakage as a function of the working pressure, an offset being added to the calculated value in order to take the inaccuracies in the calculation into account.

8. Method for operating a hydrostatic mechanical power-split transmission according to Claim 1,
**characterized in that** the measured high pressures in the hydrostatic gear and also the length of the high-pressure phases and the time intervals of the high-pressure phases in relation to one another are classified in a control apparatus and are used as evidence for the remaining service life of the hydrostatic gear.

## Revendications

1. Engrenage à distribution de puissance hydrostatique-mécanique comprenant un engrenage hydrostatique, l'engrenage hydrostatique présentant des capteurs de haute pression connectés à la commande de l'engrenage à distribution de puissance hydrostatique-mécanique et l'engrenage pouvant fonctionner à une pression de travail qui est utilisée comme pression maximale en cas de contrainte durable appliquée à l'engrenage hydrostatique, **caractérisé en ce que** pendant de courts intervalles de temps, une pression considérablement plus élevée que la pression maximale pour la contrainte durable peut être ajustée, et chaque intervalle de temps avec une pression supérieure à la pression maximale étant suivi d'un intervalle de temps d'une phase de repos avec une pression inférieure ou égale à la pression maximale, la phase de repos étant contrôlée en tenant compte des pressions de travail mesurées actuellement dans l'engrenage hydrostatique par le biais des capteurs de haute pression.

2. Engrenage à distribution de puissance hydrostatique-mécanique selon la revendication 1, **caractérisé en ce que** les phases de repos nécessaires peuvent être contrôlées exactement par une minuterie, et une nouvelle phase de haute pression peut être activée à la fin de la phase de repos.

3. Engrenage à distribution de puissance hydrostatique-mécanique selon la revendication 1, **caractérisé en ce que** dans le cas d'une panne des capteurs de haute pression, un calcul de haute pression est effectué par le biais du rapport des régimes réels d'entrée et de sortie hydrostatiques et de la différence entre les rapports de régime réels et théoriques en tenant compte de champs caractéristiques de fuites hydrostatiques en fonction de la pression de travail, une valeur de décalage étant ajoutée à la valeur calculée afin de tenir compte des imprécisions de calcul.

4. Engrenage à distribution de puissance hydrostatique-mécanique selon la revendication 1, **caractérisé en ce que** les hautes pressions mesurées dans l'engrenage hydrostatique ainsi que la longueur des phases de haute pression et les intervalles de temps des phases de haute pression les unes par rapport aux autres peuvent être classifiés dans un appareil de commande et servent à fournir des informations sur la durée de vie restante de l'engrenage hydrostatique.

5. Procédé pour faire fonctionner un engrenage à distribution de puissance hydrostatique-mécanique comprenant un engrenage hydrostatique, l'engrenage hydrostatique présentant des capteurs de haute pression connectés à la commande de l'engrenage à distribution de puissance hydrostatique-mécanique et l'engrenage pouvant fonctionner à une pression de travail qui est utilisée comme pression maximale en cas de contrainte durable appliquée à l'engrenage hydrostatique, **caractérisé en ce que** pendant de courts intervalles de temps, une pression considérablement plus élevée que la pression maximale pour la contrainte durable est ajustée, et chaque intervalle de temps avec une pression supérieure à la pression maximale étant suivi d'un intervalle de temps d'une phase de repos avec une pression inférieure ou égale à la pression maximale, la phase de repos étant contrôlée en tenant compte des pressions de travail mesurées actuellement dans l'engrenage hydrostatique par le biais des capteurs de haute pression.

6. Procédé pour faire fonctionner un engrenage à distribution de puissance hydrostatique-mécanique selon la revendication 1, **caractérisé en ce que** les phases de repos nécessaires sont contrôlées exactement par une minuterie, et une nouvelle phase de haute pression est activée à la fin de la phase de repos.

7. Procédé pour faire fonctionner un engrenage à distribution de puissance hydrostatique-mécanique selon la revendication 1, **caractérisé en ce que** dans le cas d'une panne des capteurs de haute pression, un calcul de haute pression est effectué par le biais du rapport des régimes réels d'entrée et de sortie hydrostatiques et de la différence entre les rapports de régime réels et théoriques en tenant compte de champs caractéristiques de fuites hydrostatiques en fonction de la pression de travail, une valeur de décalage étant ajoutée à la valeur calculée afin de tenir compte des imprécisions de calcul.

8. Procédé pour faire fonctionner un engrenage à distribution de puissance hydrostatique-mécanique selon la revendication 1, **caractérisé en ce que** les hautes pressions mesurées dans l'engrenage hydrostatique ainsi que la longueur des phases de haute pression et les intervalles de temps des phases de haute pression les unes par rapport aux autres sont classifiés dans un appareil de commande et servent à fournir des informations sur la durée de vie restante de l'engrenage hydrostatique.
